# EUROPÄISCHE PATENTSCHRIFT

(11) **EP 3 267 636 B1**
(45) Veröffentlichungstag und Bekanntmachung des Hinweises auf die Patenterteilung: **31.10.2018**
(21) Anmeldenummer: 16178147.1
(22) Anmeldetag: 06.07.2016
(51) Int. Cl.: H04L 12/701, H04L 12/40, H04L 29/06, H04L 12/755

(54) **MODULARES INDUSTRIELLES AUTOMATISIERUNGSGERÄT UND VERFAHREN ZUR KONFIGURATION EINES MODULAREN INDUSTRIELLEN AUTOMATISIERUNGSGERÄTS**
MODULAR INDUSTRIAL AUTOMATION DEVICE AND METHOD FOR THE CONFIGURATION OF A MODULAR INDUSTRIAL AUTOMATION DEVICE
APPAREIL D'AUTOMATISATION INDUSTRIEL MODULAIRE ET PROCÉDÉ DE CONFIGURATION D'UN APPAREIL D'AUTOMATISATION INDUSTRIEL MODULAIRE

(43) Veröffentlichungstag der Anmeldung: 10.01.2018
(73) Patentinhaber: Siemens Aktiengesellschaft, 80333 München (DE)
(72) Erfinder: Albrecht, Harald, 90475 Nürnberg (DE)

(56) Entgegenhaltungen:
- EP-A1- 2 913 727
- US-A1- 2002 059 485
- US-A1- 2007 061 455

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Eine besondere Bedeutung hat dabei eine Bereitstellung von Überwachungs-, Steuerungs- und Regelungsfunktionen in Echtzeit.

Störungen von Kommunikationsverbindungen zwischen Automatisierungsgeräten oder Rechnereinheiten eines industriellen Automatisierungssystems können zu einer nachteiligen Wiederholung einer Übermittlung einer Dienstanforderung führen. Insbesondere können nicht oder nicht vollständig übermittelte Nachrichten einen Übergang oder Verbleib eines industriellen Automatisierungssystems in einen sicheren Betriebszustand verhindern und zu einem Ausfall einer industriellen Anlage führen. Mit einem Ausfall einer Produktionsanlage ist regelmäßig ein kostspieliger Produktionsstillstand verbunden. Eine besondere Problematik resultiert in industriellen Automatisierungssystemen aus einem Meldungsverkehr mit verhältnismäßig vielen, aber relativ kurzen in Echtzeit zu übermittelnden Nachrichten. Hierdurch werden obige Probleme verstärkt.

Aus der älteren europäischen Patentanmeldung mit dem Anmeldeaktenzeichen EP15185045.0 ist ein modulares Steuerungsgerät eines industriellen Automatisierungssystems bekannt, das eine Zentraleinheit und zumindest ein Kommunikationsmodul mit jeweils einem integrierten Router umfasst. Zur Konfiguration dieses modularen Steuerungsgeräts erfassen Router-Konfigurationseinheiten erster Router verfügbare Router-Funktionen und zugeordnete Prioritätswerte anderer Router. Erste Router weisen eine erweiterte Router-Funktion für eine Verbindung mit einem übergeordneten Kommunikationsnetz auf. Zweite Router umfassen eine eingeschränkte Router-Funktion für eine Verbindung mit einem untergeordneten Feldebenen-Teilnetz. Bei vorhandenen weiteren ersten Routern überprüfen die Router-Konfigurationseinheiten der ersten Router jeweils anhand der Prioritätswerte, welchem ersten Router der höchste Prioritätswert zugeordnet ist. Der erste Router mit dem höchsten Prioritätswert wird als übergeordneter Router für eine Verbindung mit einem übergeordneten Kommunikationsnetz konfiguriert.

In EP2913727A1 ist ein modulares industrielles Automatisierungsgerät mit einem Rückwandbus-System und mehreren an das Rückwandbus-System angeschlossenen Funktionsmodulen bekannt. Die Funktionsmodule umfassen jeweils einen Kommunikationsnetzadapter, eine Protocol-Funktionseinheit zur Implementierung eines Kommunikationsprotokollstapels und ein mit dem Kommunikationsnetzadapter verknüpftes MAC-Brückenelement. Außerdem ist ein an das Rückwandbus-System angeschlossenes Router-Modul vorgesehen, das einen Kommunikationsnetzadapter, eine mit dem Kommunikationsnetzadapter verknüpfte Router-Funktionseinheit zur Implementierung eines Router-Kommunikationsprotokollstapels und für jedes Funktionsmodul jeweils ein virtueller Kommunikationsnetzadapter umfasst. Ein solcher virtueller Kommunikationsnetzadapter verknüpft die Router-Funktionseinheit über das Rückwandbus-System mit dem MAC-Brückenelement des jeweiligen Funktionsmoduls. Nur der Kommunikationsprotokollstapel des Router-Moduls umfasst Routing-Funktionen. Das Weiterleiten der Nachrichten erfolgt anhand der Ziel-MAC-Adresse.

EP2988465A1 betrifft ein Verfahren zur Übertragung eines IP-Datenpakets von einem ersten Automatisierungsmodul einer modularen Steuerung zu einem zweiten Automatisierungsmodul der modularen Steuerung über einen Rückwandbus der modularen Steuerung. Dabei umfasst das IP-Datenpaket einen Kopfbereich und einen Datenbereich. Aus einem im ersten Automatisierungsmodul vorliegenden IP-Datenpaket wird ein Transport-Datenpaket erstellt. Das Transport-Datenpaket umfasst eine Auswahl der Daten des Kopfbereichs des IP-Datenpakets und den Datenbereich des IP-Datenpakets. Das Transport-Datenpaket wird über den Rückwandbus zum zweiten Automatisierungsmodul übertragen. Anschließend erfolgt ein Rekonstruieren des IP-Datenpakets aus dem Transport-Datenpaket.

In US 2004/0114591 A1 ist eine speicherprogrammierbare Steuerung beschrieben, die ein Rückwandbus-System sowie mit dem Rückwandbus-System verbundene Modul umfasst, die mittels Internet-Kommunikationsprotokoll (IP) über das Rückwandbus-System kommunizieren. Dabei weist jedes Modul eine eigene IP-Adresse auf.

In US2007/0061455 ist ein weiteres industrielles Automatisierungsgerät beschrieben.

Der vorliegenden Erfindung liegt die Aufgabe zugrunde, ein aufwandsarm konfigurierbares modulares industrielles Automatisierungsgerät zu schaffen, das ein Routing zwischen mehreren Teilnetzen, an die das Automatisierungsgerät angeschlossen ist, ermöglicht sowie geeignetes Verfahren zur Konfiguration des modularen industriellen Automatisierungsgeräts anzugeben.

Diese Aufgabe wird erfindungsgemäß durch ein modulares industrielles Automatisierungsgerät mit den in Anspruch 1 angegebenen Merkmalen und durch ein Verfahren mit den in Anspruch 14 angegebenen Merkmalen gelöst. Vorteilhafte Weiterbildungen der vorliegenden Erfindung sind in den abhängigen Ansprüchen angegeben.

Das erfindungsgemäße Automatisierungsgerät umfasst eine Zentraleinheit zur Verarbeitung von Steuerungsprogrammen und zumindest einem Kommunikationsmodul sowie ein als IPv4-Subnetz eingerichtetes Rückwandbus-System. Die Zentraleinheit und das zumindest eine Kommunikationsmodul über das Rückwandbus-System miteinander verbunden sind und weisen jeweils ein Router-Modul zur Implementierung eines Vermittlungsschicht-Funktionen umfassenden Kommunikationsprotokollstapels auf. Die durch die Router-Module implementierten Kommunikationsprotokollstapel sind vorzugsweise IP-Stacks, insbesondere TCP/IP-Stacks oder UDP/IP-Stacks.

Die Zentraleinheit und das zumindest eine Kommunikationsmodul umfassen zusätzlich jeweils einen ersten Kommunikationsnetzadapter zur Verbindung des Router-Moduls mit dem Rückwandbus-System und zumindest einen zweiten Kommunikationsnetzadapter zur Verbindung des Router-Moduls mit einem als IPv4-Subnetz eingerichteten übergeordneten Kommunikationsnetz oder mit einem als IPv4-Subnetz eingerichteten untergeordneten Feldebenen-Teilnetz. Die Kommunikationsnetzadapter umfassen vorzugsweise jeweils eine Sende- und Empfangseinheit, insbesondere einen PHY-Schaltkreis zur Implementierung einer physikalischen Schnittstelle entsprechend OSI-Modell, sowie eine Funktionseinheit zur Steuerung eines Zugriffs auf ein Kommunikationsmedium, insbesondere einen MAC-Schaltkreis Implementierung einer Sicherungsschicht entsprechend OSI-Modell. Darüber hinaus weisen die Zentraleinheit und das zumindest eine Kommunikationsmodul jeweils eine dem Router-Modul zugeordnete Routing-Tabelle und eine Routing-Konfigurationseinheit zur Aktualisierung der jeweiligen Routing-Tabelle auf.

Erfindungsgemäß sind die Routing-Konfigurationseinheiten insbesondere durch Konfiguration dafür ausgestaltet und eingerichtet, in der jeweiligen Routing-Tabelle gespeicherte Routing-Informationen an Routing-Konfigurationseinheiten anderer Router-Module zu übermitteln. Ferner sind die Routing-Konfigurationseinheiten dafür ausgestaltet und eingerichtet, die jeweilige Routing-Tabelle anhand von Routing-Konfigurationseinheiten anderer Router-Module empfangener Routing-Informationen hinsichtlich Routen zu anderen Router-Modulen zugeordneten IPv4-Subnetzen, hinsichtlich eines Default-Gateway und hinsichtlich der Verbindung des zugeordneten Router-Moduls mit dem Rückwandbus-System aktualisieren. Dies trägt dazu bei, dass zur Konfiguration der Router-Module kein Engineering-System erforderlich ist und dass anwenderseitig keine Routen manuell eingerichtet werden müssen, damit die Teilnetze, an die das modulare industrielle Automatisierungsgerät angeschlossen ist, für einander erreichbar sind.

Die Routing-Konfigurationseinheiten können beispielsweise ferner dafür ausgestaltet und eingerichtet sein, untereinander Routing-Informationen mittels Peer-to-Peer-Kommunikation auszutauschen und bei Empfang von Routing-Informationen, die in Widerspruch zu einer jeweiligen eigenen Konfiguration stehen, einen Konfigurationsfehler zu signalisieren. Entsprechend einer alternativen Ausgestaltung der vorliegenden Erfindung ist genau eine Routing-Konfigurationseinheit als MASTER-Routing-Konfigurationseinheit eingerichtet, während alle übrigen Routing-Konfigurationseinheiten als SLAVE-Routing-Konfigurationseinheiten eingerichtet sind. Die SLAVE-Routing-Konfigurationseinheiten sind dafür ausgestaltet und eingerichtet, in der jeweiligen Routing-Tabelle gespeicherte Routing-Informationen an die MASTER-Routing-Konfigurationseinheit zu übermitteln. Dagegen ist die MASTER-Routing-Konfigurationseinheit dafür ausgestaltet und eingerichtet, in der MASTER-Routing-Konfigurationseinheit vorliegende Routing-Informationen an die SLAVE-Routing-Konfigurationseinheiten zu verteilen und genau einen Router als Default-Gateway für sämtliche Router-Module auszuwählen und vorzugeben. Vorteilhafterweise ist die Routing-Konfigurationseinheit der Zentraleinheit als MASTER-Routing-Konfigurationseinheit eingerichtet.

Die MASTER-Routing-Konfigurationseinheit ist vorzugsweise ferner dafür ausgestaltet und eingerichtet, in der MASTER-Routing-Konfigurationseinheit vorliegende Routing-Informationen an die SLAVE-Routing-Konfigurationseinheiten zu verteilen und genau einen Router als Default-Gateway für sämtliche Router-Module auszuwählen und vorzugeben. Vorteilhafterweise sind die SLAVE-Routing-Konfigurationseinheiten ferner dafür ausgestaltet und eingerichtet, die jeweilige Routing-Tabelle anhand von der MASTER-Routing-Konfigurationseinheit empfangener Routing-Informationen hinsichtlich Routen zu anderen Router-Modulen zugeordneten IPv4-Subnetzen, hinsichtlich des Default-Gateway und hinsichtlich der Verbindung des zugeordneten Router-Moduls mit dem Rückwandbus-System aktualisieren.

Entsprechend einer weiteren Ausgestaltung der vorliegenden Erfindung ist die MASTER-Routing-Konfigurationseinheit ferner dafür ausgestaltet und eingerichtet, ihre zugeordnete Routing-Tabelle anhand von SLAVE-Routing-Konfigurationseinheiten empfangener Routing-Informationen hinsichtlich Routen zu anderen Router-Modulen zugeordneten IPv4-Subnetzen, des Default-Gateway und der Verbindung des zugeordneten Router-Moduls mit dem Rückwandbus-System aktualisieren. Darüber hinaus kann die MASTER-Routing-Konfigurationseinheit ferner dafür ausgestaltet und eingerichtet sein, bei mehr als einem Default-Gateway einen Konfigurationsfehler zu signalisieren. Vorzugsweise umfasst die MASTER-Routing-Konfigurationseinheit eine zentrale Datenbank, in der Angaben über das dem Rückwandbus-System zugeordnete IPv4-Subnetz, über eine dem Rückwandbus-System zugeordnete IPv4-Adresse des Router-Moduls, das für eine Anbindung an das Default-Gateway vorgesehen ist, über die dem Rückwandbus-System zugeordneten IPv4-Adressen sämtlicher Router-Module und über den Router-Modulen zugeordnete IPv4-Subnetze gespeichert sind.

Die Zentraleinheit und das zumindest eine Kommunikationsmodul können beispielsweise jeweils eine Router-Konfigurationseinheit zur Bereitstellung von Schnittstelleninformationen, die dem ersten und dem zweiten Kommunikationsnetzadapter zugeordnet sind, an das zugeordnete Router-Modul und an die jeweilige Routing-Konfigurationseinheit aufweisen. Vorteilhafterweise ist die Router-Konfigurationseinheit mit dem zugeordneten ersten und zweiten Kommunikationsnetzadapter verbunden, und die Schnittstelleninformationen umfassen Angaben über dem ersten und zweiten Kommunikationsnetzadapter zugeordnete IPv4-Adressen und über dem übergeordneten Kommunikationsnetz oder untergeordneten Feldebenen-Teilnetz zugeordnete IPv4-Netzmasken. Die Schnittstelleninformationen können insbesondere Angaben über ein Default-Gateway umfassen. Darüber hinaus kann die jeweilige Router-Konfigurationseinheit beispielsweise ein DCP-Server entsprechend Discovery and Basic Configuration Protocol sein.

Entsprechend dem erfindungsgemäßen Verfahren zur Konfiguration eines modularen industriellen Automatisierungsgeräts, das ein Rückwandbus-System, eine Zentraleinheit zur Verarbeitung von Steuerungsprogrammen und zumindest ein Kommunikationsmodul umfasst, wird das Rückwandbus-System als IPv4-Subnetz eingerichtet. Die Zentraleinheit und das zumindest eine Kommunikationsmodul werden über das Rückwandbus-System miteinander verbunden und weisen jeweils ein Router-Modul zur Implementierung eines Vermittlungsschicht-Funktionen umfassenden Kommunikationsprotokollstapels auf. Außerdem umfassen die Zentraleinheit und das zumindest eine Kommunikationsmodul jeweils einen ersten Kommunikationsnetzadapter zur Verbindung des Router-Moduls mit dem Rückwandbus-System und zumindest einen zweiten Kommunikationsnetzadapter zur Verbindung des Router-Moduls mit einem als IPv4-Subnetz eingerichteten übergeordneten Kommunikationsnetz oder mit einem als IPv4-Subnetz eingerichteten untergeordneten Feldebenen-Teilnetz. Darüber hinaus weisen die Zentraleinheit und das zumindest eine Kommunikationsmodul jeweils eine dem Router-Modul zugeordnete Routing-Tabelle und eine Routing-Konfigurationseinheit zur Aktualisierung der jeweiligen Routing-Tabelle auf.

Erfindungsgemäß übermitteln die Routing-Konfigurationseinheiten in der jeweiligen Routing-Tabelle gespeicherte Routing-Informationen an Routing-Konfigurationseinheiten anderer Router-Module. Anhand von Routing-Konfigurationseinheiten anderer Router-Module empfangener Routing-Informationen aktualisieren die Routing-Konfigurationseinheiten die jeweilige Routing-Tabelle hinsichtlich Routen zu anderen Router-Modulen zugeordneten IPv4-Subnetzen, hinsichtlich eines Default-Gateway und hinsichtlich der Verbindung des zugeordneten Router-Moduls mit dem Rückwandbus-System.

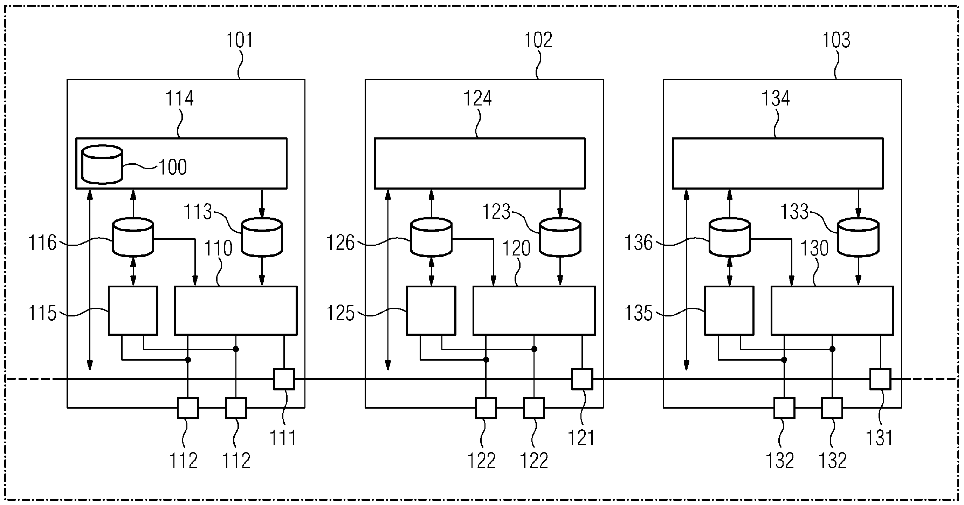

Die vorliegende Erfindung wird nachfolgend an einem Ausführungsbeispiel anhand der Zeichnung näher erläutert. Es zeigt die
- Figur: eine schematische Darstellung eine modularen Automatisierungsgeräts eines industriellen Automatisierungssystems mit einer Zentraleinheit und mehreren Kommunikationsmodulen, die jeweils ein Router-Modul umfassen.

Das in der Figur dargestellte modulare Automatisierungsgerät eines industriellen Automatisierungssystems weist eine Zentraleinheit 101 zur Verarbeitung von Steuerungsprogrammen und zwei Kommunikationsmodule 102-103 auf. Die Zentraleinheit 101 und die Kommunikationsmodule 102 sind über ein Rückwandbus-System 104 miteinander verbunden, das als IPv4-Subnetz eingerichtet ist. Das modulare Automatisierungsgerät ist im vorliegenden Ausführungsbeispiel eine speicherprogrammierbare Steuerung.

Die Zentraleinheit 101 und die beiden Kommunikationsmodule 102-103 weisen jeweils ein Router-Modul 110, 120, 130 zur Implementierung eines Vermittlungsschicht-Funktionen umfassenden Kommunikationsprotokollstapels auf. Die durch die Router-Module 110, 120 implementierten Kommunikationsprotokollstapel sind vorzugsweise IP-Stacks, insbesondere TCP/IP-Stacks oder UDP/IP-Stacks. Außerdem umfassen die Zentraleinheit 101 und die beiden Kommunikationsmodule 102-103 jeweils einen ersten Kommunikationsnetzadapter 111, 121, 131 zur Verbindung des jeweiligen Router-Moduls 110, 120, 130 mit dem Rückwandbus-System 104. Zusätzlich weisen die Zentraleinheit 101 und die beiden Kommunikationsmodule 102-103 jeweils mehrere zweite Kommunikationsnetzadapter 112, 122, 132 zur Verbindung des jeweiligen Router-Moduls 110, 120, 130 mit einem als IPv4-Subnetz eingerichteten übergeordneten Kommunikationsnetz oder mit einem als IPv4-Subnetz eingerichteten untergeordneten Feldebenen-Teilnetz auf. Das übergeordnete Kommunikationsnetz kann beispielsweise ein Anlagennetz sein. Darüber hinaus umfassen die Zentraleinheit 101 und die beiden Kommunikationsmodule 102-103 jeweils eine dem jeweiligen Router-Modul 110, 120, 130 zugeordnete Routing-Tabelle 113, 123, 133 und eine Routing-Konfigurationseinheit 114, 124, 134 zur Aktualisierung der jeweiligen Routing-Tabelle 113, 123, 133. Die umfassen jeweils eine durch einen PHY-Schaltkreis implementierte Sende- und Empfangseinheit sowie eine durch einen MAC-Schaltkreis implementierte Funktionseinheit zur Steuerung eines Zugriffs auf ein Kommunikationsmedium. Die Router-Module 110, 120, 130 greifen über Schnittstellen-Treiber als Hardwareabstraktionselemente auf ihre Kommunikationsnetzadapter 111-112, 121-122, 131-132 zu.

Die Routing-Konfigurationseinheiten 114, 124, 134 übermitteln jeweils in ihrer Routing-Tabelle 113, 123, 133 gespeicherte Routing-Informationen an Routing-Konfigurationseinheiten 114, 124, 134 anderer Router-Module 110, 120, 130. Anhand von Routing-Konfigurationseinheiten 114, 124, 134 anderer Router-Module 110, 120, 130 empfangener Routing-Informationen aktualisieren die Routing-Konfigurationseinheiten 114, 124, 134 jeweils ihre Routing-Tabelle 113, 123, 133 hinsichtlich Routen zu anderen Router-Modulen 110, 120, 130 zugeordneten IPv4-Subnetzen, hinsichtlich eines Default-Gateway und hinsichtlich der Verbindung des zugeordneten Router-ModulsllO, 120, 130 mit dem Rückwandbus-System 104. Grundsätzlich können die Routing-Konfigurationseinheiten 114, 124, 134 untereinander Routing-Informationen mittels Peer-to-Peer-Kommunikation austauschen. In diesem Fall kann vorgesehen sein, dass die Routing-Konfigurationseinheiten 114, 124, 134 bei Empfang von Routing-Informationen, die in Widerspruch zu ihrer eigenen Konfiguration stehen, einen Konfigurationsfehler signalisieren.

Alternativ zu einem Peer-to-Peer-Ansatz ist die Routing-Konfigurationseinheit 114 der Zentraleinheit 101 im vorliegenden Ausführungsbeispiel als MASTER-Routing-Konfigurationseinheit eingerichtet, während die Routing-Konfigurationseinheiten 124, 134 der Kommunikationsmodule 102-103 als SLAVE-Routing-Konfigurationseinheiten eingerichtet sind. Die SLAVE-Routing-Konfigurationseinheiten 124, 134 übermitteln in ihrer zugeordneten Routing-Tabelle 123, 133 gespeicherte Routing-Informationen an die MASTER-Routing-Konfigurationseinheit 114. Anhand von SLAVE-Routing-Konfigurationseinheiten 124, 134 empfangener Routing-Informationen aktualisiert die MASTER-Routing-Konfigurationseinheit 114 ihre zugeordnete Routing-Tabelle 113 hinsichtlich Routen zu anderen Router-Modulen 120, 130 zugeordneten IPv4-Subnetzen, des Default-Gateway und der Verbindung ihres zugeordneten Router-Moduls 110 mit dem Rückwandbus-System 104. Vorzugsweise signalisiert die MASTER-Routing-Konfigurationseinheit 114 bei mehr als einem Default-Gateway einen Konfigurationsfehler.

Zur konsistenten Verwaltung von Routing-Informationen umfasst die MASTER-Routing-Konfigurationseinheit 114 eine zentrale Datenbank 100, in der Angaben über
- das dem Rückwandbus-System 104 zugeordnete IPv4-Subnetz,
- eine dem Rückwandbus-System 104 zugeordnete IPv4-Adresse des Router-Moduls 110, 120, 130, das für eine Anbindung an das Default-Gateway vorgesehen ist,
- die dem Rückwandbus-System 104 zugeordneten IPv4-Adressen sämtlicher Router-Module 110, 120, 130,
- den Router-Modulen 110, 120, 130 zugeordnete IPv4-Subnetze, die vom jeweiligen Router-Modul 110, 120, 130 über dessen zweite Kommunikationsnetzadapter 112, 122, 132 direkt oder indirekt erreichbar sind,
gespeichert sind. Die dem Rückwandbus-System 104 zugeordneten IPv4-Adressen der Router-Module 110, 120, 130 können sich beispielsweise aus einem Hardware-Steckplatz am Rückwandbus-System 104 für das jeweilige Router-Modul 110, 120, 130 ergeben.

Die MASTER-Routing-Konfigurationseinheit 114 verteilt in der zentrale Datenbank 100 vorliegende Routing-Informationen an die SLAVE-Routing-Konfigurationseinheiten 124, 134 und wählt genau einen Router als Default-Gateway für sämtliche Router-Module 110, 120, 130 aus, wodurch das Default-Gateway für alle Router-Module 110, 120, 130 einheitlich vorgegeben wird. Die SLAVE-Routing-Konfigurationseinheiten 124, 134 aktualisieren ihre Routing-Tabelle 123, 133 anhand von der MASTER-Routing-Konfigurationseiheit 114 empfangener Routing-Informationen hinsichtlich
- Routen zu anderen Router-Modulen 110, 120, 130 zugeordneten IPv4-Subnetzen,
- des Default-Gateway,
- der Verbindung des zugeordneten Router-Moduls 110, 120, 130 mit dem Rückwandbus-System 104.

Die Zentraleinheit 101 und die Kommunikationsmodule 102-103 weisen jeweils eine Router-Konfigurationseinheit 115, 125, 135 zur Bereitstellung von Schnittstelleninformationen auf, die ihren ersten und zweiten Kommunikationsnetzadaptern 111-112, 121-122, 131-132 zugeordnet sind. Hierzu sind die Router-Konfigurationseinheiten 115, 125, 135 mit den zugeordneten Kommunikationsnetzadaptern 111-112, 121-122, 131-132 verbunden. Die Router-Konfigurationseinheiten 115, 125, 135 können beispielsweise DCP-Server entsprechend Discovery and Basic Configuration Protocol sein und zur Bereitstellung von PROFINET-Basisfunktionen dienen.

Die Schnittstelleninformationen werden durch die Router-Konfigurationseinheiten 115, 125, 135 in einer Speichereinheit 116, 126, 136 der jeweiligen Router-Konfigurationseinheit 115, 125, 135 gespeichert und von dort für das zugeordnete Router-Modul 110, 120, 130 und für die jeweilige Routing-Konfigurationseinheit 114, 124, 134 abrufbar bereitgestellt. Die Schnittstelleninformationen umfassen Angaben über dem jeweiligen ersten und zweiten Kommunikationsnetzadapter zugeordnete IPv4-Adressen sowie über dem übergeordneten Kommunikationsnetz oder untergeordneten Feldebenen-Teilnetz zugeordnete IPv4-Netzmasken. Außerdem geben die Schnittstelleninformationen das Default-Gateway an. Die Schnittstelleninformationen werden nicht nur zur Konfiguration des jeweiligen lokalen Kommunikationsprotokollstapels verwendet, sondern auch Erzeugung von IPv4-Subnetz-Informationen durch die Routing-Konfigurationseinheiten 114, 124, 134 hinsichtlich der über die jeweiligen Router-Module 110, 120, 130 erreichbaren IPv4-Subnetze.

## Patentansprüche

1. Modulares industrielles Automatisierungsgerät mit
- einer Zentraleinheit (101) zur Verarbeitung von Steuerungsprogrammen und zumindest einem Kommunikationsmodul (102-103) ,
- einem als IPv4-Subnetz eingerichteten Rückwandbus-System (104),
- wobei die Zentraleinheit und das zumindest eine Kommunikationsmodul über das Rückwandbus-System miteinander verbunden sind und jeweils
- ein Router-Modul (110, 120, 130) zur Implementierung eines Vermittlungsschicht-Funktionen umfassenden Kommunikationsprotokollstapels,
- einen ersten Kommunikationsnetzadapter (111, 121, 131) zur Verbindung des Router-Moduls mit dem Rückwandbus-System,
- zumindest einen zweiten Kommunikationsnetzadapter (112, 122, 132) zur Verbindung des Router-Moduls mit einem als IPv4-Subnetz eingerichteten übergeordneten Kommunikationsnetz oder mit einem als IPv4-Subnetz eingerichteten untergeordneten Feldebenen-Teilnetz,
- eine dem Router-Modul zugeordnete Routing-Tabelle (113, 123, 133) und
- eine Routing-Konfigurationseinheit (114, 124, 134) zur Aktualisierung der jeweiligen Routing-Tabelle aufweisen,
- wobei die Routing-Konfigurationseinheiten dafür ausgestaltet und eingerichtet sind, in der jeweiligen Routing-Tabelle gespeicherte Routing-Informationen an Routing-Konfigurationseinheiten anderer Router-Module zu übermitteln,
- wobei die Routing-Konfigurationseinheiten ferner dafür ausgestaltet und eingerichtet sind, die jeweilige Routing-Tabelle anhand von Routing-Konfigurationseinheiten anderer Router-Module empfangener Routing-Informationen hinsichtlich Routen zu anderen Router-Modulen zugeordneten IPv4-Subnetzen, hinsichtlich eines Default-Gateway und hinsichtlich der Verbindung des zugeordneten Router-Moduls mit dem Rückwandbus-System aktualisieren.

2. Automatisierungsgerät nach Anspruch 1,
bei dem genau eine Routing-Konfigurationseinheit als MASTER-Routing-Konfigurationseinheit eingerichtet ist, bei dem alle übrigen Routing-Konfigurationseinheiten als SLAVE-Routing-Konfigurationseinheiten eingerichtet sind, bei dem die SLAVE-Routing-Konfigurationseinheiten dafür ausgestaltet und eingerichtet sind, in der jeweiligen Routing-Tabelle gespeicherte Routing-Informationen an die MASTER-Routing-Konfigurationseinheit zu übermitteln, bei dem die MASTER-Routing-Konfigurationseinheit dafür ausgestaltet und eingerichtet ist, in der MASTER-Routing-Konfigurationseinheit vorliegende Routing-Informationen an die SLAVE-Routing-Konfigurationseinheiten zu verteilen und genau einen Router als Default-Gateway für sämtliche Router-Module auszuwählen und vorzugeben, bei dem die MASTER-Routing-Konfigurationseinheit ferner dafür ausgestaltet und eingerichtet ist, in der MASTER-Routing-Konfigurationseinheit vorliegende Routing-Informationen an die SLAVE-Routing-Konfigurationseinheiten zu verteilen und genau einen Router als Default-Gateway für sämtliche Router-Module auszuwählen und vorzugeben und bei dem die SLAVE-Routing-Konfigurationseinheiten ferner dafür ausgestaltet und eingerichtet sind, die jeweilige Routing-Tabelle anhand von der MASTER-Routing-Konfigurationseinheit empfangener Routing-Informationen hinsichtlich Routen zu anderen Router-Modulen zugeordneten IPv4-Subnetzen, hinsichtlich des Default-Gateway und hinsichtlich der Verbindung des zugeordneten Router-Moduls mit dem Rückwandbus-System aktualisieren.

3. Automatisierungsgerät nach Anspruch 2,
bei dem die MASTER-Routing-Konfigurationseinheit ferner dafür ausgestaltet und eingerichtet ist, ihre zugeordnete Routing-Tabelle anhand von SLAVE-Routing-Konfigurationseinheiten empfangener Routing-Informationen hinsichtlich Routen zu anderen Router-Modulen zugeordneten IPv4-Subnetzen, des Default-Gateway und der Verbindung des zugeordneten Router-Moduls mit dem Rückwandbus-System aktualisieren.

4. Automatisierungsgerät nach einem der Ansprüche 2 oder 3,
bei dem die MASTER-Routing-Konfigurationseinheit ferner dafür ausgestaltet und eingerichtet ist, bei mehr als einem Default-Gateway einen Konfigurationsfehler zu signalisieren.

5. Automatisierungsgerät nach einem der Ansprüche 2 bis 4,
bei dem die MASTER-Routing-Konfigurationseinheit eine zentrale Datenbank (100) umfasst, in der Angaben über das dem Rückwandbus-System zugeordnete IPv4-Subnetz, über eine dem Rückwandbus-System zugeordnete IPv4-Adresse des Router-Moduls, das für eine Anbindung an das Default-Gateway vorgesehen ist, über die dem Rückwandbus-System zugeordneten IPv4-Adressen sämtlicher Router-Module und über den Router-Modulen zugeordnete IPv4-Subnetze gespeichert sind.

6. Automatisierungsgerät nach einem der Ansprüche 2 bis 5,
bei dem die Routing-Konfigurationseinheit der Zentraleinheit als MASTER-Routing-Konfigurationseinheit eingerichtet ist.

7. Automatisierungsgerät nach Anspruch 1,
bei dem die Routing-Konfigurationseinheiten ferner dafür ausgestaltet und eingerichtet sind, untereinander Routing-Informationen mittels Peer-to-Peer-Kommunikation auszutauschen und bei Empfang von Routing-Informationen, die in Widerspruch zu einer jeweiligen eigenen Konfiguration stehen, einen Konfigurationsfehler zu signalisieren.

8. Automatisierungsgerät nach einem der Ansprüche 1 bis 7,
bei dem die Zentraleinheit und das zumindest eine Kommunikationsmodul jeweils eine Router-Konfigurationseinheit (115, 125, 135) zur Bereitstellung von Schnittstelleninformationen, die dem ersten und dem zweiten Kommunikationsnetzadapter zugeordnet sind, an das zugeordnete Router-Modul und an die jeweilige Routing-Konfigurationseinheit aufweisen.

9. Automatisierungsgerät nach Anspruch 8,
bei dem die Router-Konfigurationseinheit mit dem zugeordneten ersten und zweiten Kommunikationsnetzadapter verbunden ist und bei dem die Schnittstelleninformationen Angaben über dem ersten und zweiten Kommunikationsnetzadapter zugeordnete IPv4-Adressen und über dem übergeordneten Kommunikationsnetz oder untergeordneten Feldebenen-Teilnetz zugeordnete IPv4-Netzmasken umfassen.

10. Automatisierungsgerät nach Anspruch 9,
bei dem die Schnittstelleninformationen Angaben über ein Default-Gateway umfassen.

11. Automatisierungsgerät nach einem der Ansprüche 8 bis 10, bei dem die Router-Konfigurationseinheit ein DCP-Server entsprechend Discovery and Basic Configuration Protocol ist.

12. Automatisierungsgerät nach einem der Ansprüche 1 bis 10, bei dem die durch die Router-Module implementierten Kommunikationsprotokollstapel IP-Stacks, insbesondere TCP/IP-Stacks oder UDP/IP-Stacks, sind.

13. Automatisierungsgerät nach einem der Ansprüche 1 bis 12, bei dem die Kommunikationsnetzadapter jeweils eine Sende- und Empfangseinheit sowie eine Funktionseinheit zur Steuerung eines Zugriffs auf ein Kommunikationsmedium umfassen.

14. Verfahren zur Konfiguration eines modularen industriellen Automatisierungsgeräts nach einem der Ansprüche 1-13, bei dem
- das modulare industrielle Automatisierungsgerät ein Rückwandbus-System, eine Zentraleinheit zur Verarbeitung von Steuerungsprogrammen und zumindest ein Kommunikationsmodul umfasst,
- das Rückwandbus-System als IPv4-Subnetz eingerichtet wird,
- die Zentraleinheit und das zumindest eine Kommunikationsmodul über das Rückwandbus-System miteinander verbunden werden und jeweils
- ein Router-Modul zur Implementierung eines Vermittlungsschicht-Funktionen umfassenden Kommunikationsprotokollstapels,
- einen ersten Kommunikationsnetzadapter zur Verbindung des Router-Moduls mit dem Rückwandbus-System,
- zumindest einen zweiten Kommunikationsnetzadapter zur Verbindung des Router-Moduls mit einem als IPv4-Subnetz eingerichteten übergeordneten Kommunikationsnetz oder mit einem als IPv4-Subnetz eingerichteten untergeordneten Feldebenen-Teilnetz,
- eine dem Router-Modul zugeordnete Routing-Tabelle und
- eine Routing-Konfigurationseinheit zur Aktualisierung der jeweiligen Routing-Tabelle aufweisen,
- die Routing-Konfigurationseinheiten in der jeweiligen Routing-Tabelle gespeicherte Routing-Informationen an Routing-Konfigurationseinheiten anderer Router-Module übermitteln,
- die Routing-Konfigurationseinheiten die jeweilige Routing-Tabelle anhand von Routing-Konfigurationseinheiten anderer Router-Module empfangener Routing-Informationen hinsichtlich Routen zu anderen Router-Modulen zugeordneten IPv4-Subnetzen, hinsichtlich eines Default-Gateway und hinsichtlich der Verbindung des zugeordneten Router-Moduls mit dem Rückwandbus-System aktualisieren.

15. Verfahren nach Anspruch 14,
bei dem genau eine Routing-Konfigurationseinheit als MASTER-Routing-Konfigurationseinheit eingerichtet wird, bei dem alle übrigen Routing-Konfigurationseinheiten als SLAVE-Routing-Konfigurationseinheiten eingerichtet werden, bei dem die SLAVE-Routing-Konfigurationseinheiten in der jeweiligen Routing-Tabelle gespeicherte Routing-Informationen an die MASTER-Routing-Konfigurationseinheit übermitteln, bei dem die MASTER-Routing-Konfigurationseinheit in der MASTER-Routing-Konfigurationseinheit vorliegende Routing-Informationen an die SLAVE-Routing-Konfigurationseinheiten verteilt und genau einen Router als Default-Gateway für sämtliche Router-Module auswählt und vorgibt und bei dem die SLAVE-Routing-Konfigurationseinheiten die jeweilige Routing-Tabelle anhand von der MASTER-Routing-Konfigurationseiheit empfangener Routing-Informationen hinsichtlich Routen zu anderen Router-Modulen zugeordneten IPv4-Subnetzen, hinsichtlich des Default-Gateway und hinsichtlich der Verbindung des zugeordneten Router-Moduls mit dem Rückwandbus-System aktualisieren.

16. Verfahren nach Anspruch 15,
bei dem die MASTER-Routing-Konfigurationseinheit ihre zugeordnete Routing-Tabelle anhand von SLAVE-Routing-Konfigurationseinheiten empfangener Routing-Informationen hinsichtlich Routen zu anderen Router-Modulen zugeordneten IPv4-Subnetzen, des Default-Gateway und der Verbindung des zugeordneten Router-Moduls mit dem Rückwandbus-System aktualisiert.

17. Verfahren nach einem der Ansprüche 15 oder 16,
bei dem die MASTER-Routing-Konfigurationseinheit bei mehr als einem Default-Gateway einen Konfigurationsfehler signalisiert.

18. Verfahren nach einem der Ansprüche 15 bis 17,
bei dem die Routing-Konfigurationseinheit der Zentraleinheit als MASTER-Routing-Konfigurationseinheit eingerichtet wird.

19. Verfahren nach Anspruch 14,
bei dem die Routing-Konfigurationseinheiten untereinander Routing-Informationen mittels Peer-to-Peer-Kommunikation austauschen und bei Empfang von Routing-Informationen, die in Widerspruch zu einer jeweiligen eigenen Konfiguration stehen, einen Konfigurationsfehler signalisieren.

## Claims

1. Modular industrial automation device having
- a central unit (101) for processing control programs and at least one communication module (102-103),
- a backplane bus system (104) which is set up as an IPv4 subnetwork,
- the central unit and the at least one communication module being connected to one another via the backplane bus system and each having
- a router module (110, 120, 130) for implementing a communication protocol stack comprising network layer functions,
- a first communication network adapter (111, 121, 131) for connecting the router module to the backplane bus system,
- at least one second communication network adapter (112, 122, 132) for connecting the router module to a superordinate communication network set up as an IPv4 subnetwork or to a subordinate field level subnet set up as an IPv4 subnetwork,
- a routing table (113, 123, 133) assigned to the router module, and
- a routing configuration unit (114, 124, 134) for updating the respective routing table,
- the routing configuration units being configured and set up to transmit routing information stored in the respective routing table to routing configuration units of other router modules,
- the routing configuration units also being configured and set up to update the respective routing table on the basis of routing information which is received from routing configuration units of other router modules with regard to routes to IPv4 subnetworks assigned to other router modules, a default gateway and the connection between the associated router module and the backplane bus system.

2. Automation device according to Claim 1,
in which precisely one routing configuration unit is set up as a MASTER routing configuration unit, in which all other routing configuration units are set up as SLAVE routing configuration units, in which the SLAVE routing configuration units are configured and set up to transmit routing information stored in the respective routing table to the MASTER routing configuration unit, in which the MASTER routing configuration unit is configured and set up to distribute routing information available in the MASTER routing configuration unit to the SLAVE routing configuration units and to select and predefine precisely one router as a default gateway for all router modules, in which the MASTER routing configuration unit is also configured and set up to distribute routing information available in the MASTER routing configuration unit to the SLAVE routing configuration units and to select and predefine precisely one router as a default gateway for all router modules, and in which the SLAVE routing configuration units are also configured and set up to update the respective routing table on the basis of routing information which is received from the MASTER routing configuration unit with regard to routes to IPv4 subnetworks assigned to other router modules, the default gateway and the connection between the associated router module and the backplane bus system.

3. Automation device according to Claim 2,
in which the MASTER routing configuration unit is also configured and set up to update its associated routing table on the basis of routing information which is received from SLAVE routing configuration units with regard to routes to IPv4 subnetworks assigned to other router modules, the default gateway and the connection between the associated router module and the backplane bus system.

4. Automation device according to either of Claims 2 and 3,
in which the MASTER routing configuration unit is also configured and set up to signal a configuration error if there is more than one default gateway.

5. Automation device according to one of Claims 2 to 4,
in which the MASTER routing configuration unit comprises a central database (100) which stores details of the IPv4 subnetwork assigned to the backplane bus system, an IPv4 address of the router module which is intended to be connected to the default gateway, which address is assigned to the backplane bus system, the IPv4 addresses of all router modules, which addresses are assigned to the backplane bus system, and IPv4 subnetworks assigned to the router modules.

6. Automation device according to one of Claims 2 to 5,
in which the routing configuration unit of the central unit is set up as a MASTER routing configuration unit.

7. Automation device according to Claim 1,
in which the routing configuration units are also configured and set up to interchange routing information with one another by means of peer-to-peer communication and to signal a configuration error if routing information which contradicts a respective own configuration is received.

8. Automation device according to one of Claims 1 to 7,
in which the central unit and the at least one communication module each have a router configuration unit (115, 125, 135) for providing the associated router module and the respective routing configuration unit with interface information assigned to the first and second communication network adapters.

9. Automation device according to Claim 8,
in which the router configuration unit is connected to the associated first and second communication network adapters, and in which the interface information comprises details of IPv4 addresses assigned to the first and second communication network adapters and IPv4 network masks assigned to the superordinate communication network or to the subordinate field level subnet.

10. Automation device according to Claim 9,
in which the interface information comprises details of a default gateway.

11. Automation device according to one of Claims 8 to 10,
in which the router configuration unit is a DCP server corresponding to the Discovery and Basic Configuration Protocol.

12. Automation device according to one of Claims 1 to 10,
in which the communication protocol stacks implemented by the router modules are IP stacks, in particular TCP/IP stacks or UDP/IP stacks.

13. Automation device according to one of Claims 1 to 12,
in which the communication network adapters each comprise a transmitting and receiving unit and a functional unit for controlling access to a communication medium.

14. Method for configuring a modular industrial automation device according to one of Claims 1-13, in which
- the modular industrial automation device comprises a backplane bus system, a central unit for processing control programs and at least one communication module,
- the backplane bus system is set up as an IPv4 subnetwork,
- the central unit and the at least one communication module are connected to one another via the backplane bus system and each have
- a router module for implementing a communication protocol stack comprising network layer functions,
- a first communication network adapter for connecting the router module to the backplane bus system,
- at least one second communication network adapter for connecting the router module to a superordinate communication network set up as an IPv4 subnetwork or to a subordinate field level subnet set up as an IPv4 subnetwork,
- a routing table assigned to the router module, and
- a routing configuration unit for updating the respective routing table,
- the routing configuration units transmit routing information stored in the respective routing table to routing configuration units of other router modules,
- the routing configuration units update the respective routing table on the basis of routing information which is received from routing configuration units of other router modules and relates to routes to IPv4 subnetworks assigned to other router modules, a default gateway and the connection between the associated router module and the backplane bus system.

15. Method according to Claim 14,
in which precisely one routing configuration unit is set up as a MASTER routing configuration unit, in which all other routing configuration units are set up as SLAVE routing configuration units, in which the SLAVE routing configuration units transmit routing information stored in the respective routing table to the MASTER routing configuration unit, in which the MASTER routing configuration unit distributes routing information available in the MASTER routing configuration unit to the SLAVE routing configuration units and selects and predefines precisely one router as a default gateway for all router modules, and in which the SLAVE routing configuration units update the respective routing table on the basis of routing information which is received from the MASTER routing configuration unit and relates to routes to IPv4 subnetworks assigned to other router modules, the default gateway and the connection between the associated router module and the backplane bus system.

16. Method according to Claim 15,
in which the MASTER routing configuration unit updates its associated routing table on the basis of routing information which is received from SLAVE routing configuration units and relates to routes to IPv4 subnetworks assigned to other router modules, the default gateway and the connection between the associated router module and the backplane bus system.

17. Method according to either of Claims 15 and 16,
in which the MASTER routing configuration unit signals a configuration error if there is more than one default gateway.

18. Method according to one of Claims 15 to 17,
in which the routing configuration unit of the central unit is set up as a MASTER routing configuration unit.

19. Method according to Claim 14,
in which the routing configuration units interchange routing information with one another by means of peer-to-peer communication and signal a configuration error if routing information which contradicts a respective own configuration is received.

## Revendications

1. Appareil d'automatisation industriel modulaire, comprenant
- une unité (101) centrale de traitement de programme de commande et au moins un module (102-103) de communication,
- un système (104) de bus de panneau arrière agencé en sous-réseau IPv4,
- dans lequel l'unité centrale et le au moins un module de communication sont reliés entre eux par le système de bus de panneau arrière et ont chacun
- un module (110, 120, 130) de routeur pour la mise en oeuvre d'une pile de protocole de communication, comprenant des fonctions de couche de commutation,
- un premier adaptateur (111, 121, 131) de réseau de communication pour relier le module de routeur au système de bus de panneau arrière,
- au moins un deuxième adaptateur (112, 122, 132) de réseau de communication pour relier le module de routeur à un réseau de communication supérieur hiérarchiquement, agencé en sous-réseau IPv4 ou avec un sous-réseau de plan sur site subordonné, agencé en sous-réseau IPv4,
- une table (113, 123, 133) de routage associée au module de routeur et
- une unité (114, 124, 134) de configuration de routage pour la mise à jour des tables de routage respectives,
- dans lequel les unités de configuration de routage sont conformées et agencées pour transmettre des informations de routage mémorisées dans les tables de routage respectives aux unités de configuration de routage d'autres modules de routeur,
- dans lequel les unités de configuration de routage sont conformées et agencées, en outre, pour mettre à jour les tables respectives de routage à l'aide d'informations de routage reçues d'unités de configuration de routage d'autres modules de routeur en ce qui concerne des sous-réseaux IPv4 associés à d'autres modules de routeur, en ce qui concerne un default-gateway et en ce qui concerne la liaison du module de routeur associé au système de bus de panneau arrière.

2. Appareil d'automatisation suivant la revendication 1,
dans lequel exactement une unité de configuration de routage est agencée en unité de configuration de routage maître, dans lequel toutes les autres unités de configuration de routage sont agencées en unités de configuration de routage esclaves, dans lequel les unités de configuration de routage esclaves sont conformées et agencées pour transmettre des informations de routage mémorisées dans les tables de routage respectives à l'unité de configuration de routage maître, dans lequel l'unité de configuration de routage maître est conformée et agencée pour répartir des informations de routage présentes dans l'unité de configuration de routage maître entre les unités de configuration de routage esclaves et pour choisir et prescrire exactement un routeur comme défault-gateway pour l'ensemble des modules de routeur, dans lequel l'unité de configuration de routage maître est conformée et agencée, en outre, pour répartir des informations de routage présentes dans l'unité de configuration de routage maître entre les unités de configuration de routage esclaves et choisir et prescrire exactement un routeur comme défault-gateway pour l'ensemble des modules de routeur, et dans lequel les unités de configuration de routage esclaves sont conformées et agencées, en outre, pour mettre à jour les tables de routage respectives à l'aide d'informations de routage reçues de l'unité de configuration de routage maître en ce qui concerne des routes vers des sous-réseaux IPv4 associés à d'autres modules de routeur, en ce qui concerne le défault-gateway et en ce qui concerne la liaison du module de routeur associé au système de bus de panneau arrière.

3. Appareil d'automatisation suivant la revendication 2,
dans lequel l'unité de configuration de routage maître est conformée et agencée, en outre, pour mettre à jour sa table de routage associée à l'aide d'informations de routage reçues d'unités de configuration de routage esclaves, en ce qui concerne des routes vers des sous-réseaux IPv4 associés à d'autres modules de routeur, le défault-gateway et la liaison du module de routeur associé au système de bus de panneau arrière.

4. Appareil d'automatisation suivant l'une des revendications 2 ou 3,
dans lequel l'unité de configuration de routage maître est conformée et agencée, en outre, pour signaler une erreur de configuration s'il y a plus d'un défault-gateway.

5. Appareil d'automatisation suivant l'une des revendications 2 à 4,
dans lequel l'unité de configuration de routage maître comprend une base (100) de données centrales, dans laquelle sont mémorisées des indications sur le sous-réseau IPv4 associés au système de bus de panneau arrière sur une adresse IPv4, associée au système de bus de panneau arrière, du module de routeur, qui est prévue pour un rattachement au défault-gateway sur les adresses IPv4, associées au système de bus de panneau arrière, de l'ensemble des modules de routeur et sur des sous-réseaux IPv4 associés aux modules de routeur.

6. Appareil d'automatisation suivant l'une des revendications 2 à 5,
dans lequel l'unité de configuration de routage de l'unité centrale est agencée en unité de configuration de routage maître.

7. Appareil d'automatisation suivant la revendication 1,
dans lequel les unités de configuration de routage sont conformées et agencées, en outre, pour échanger entre elles des informations de routage au moyen de communication peer-to-peer et, à la réception d'informations de routage, qui sont en contradiction avec une configuration propre respective, pour signaler une erreur de configuration.

8. Appareil d'automatisation suivant l'une des revendications 1 à 7,
dans lequel l'unité centrale et le au moins un module de communication ont chacun une unité (115, 125, 135) de configuration de routeur pour la mise à disposition d'informations d'interface, qui sont associées au premier et au deuxième adaptateurs de réseau de communication, du module de routeur associé et de l'unité de configuration de routage respective.

9. Appareil d'automatisation suivant la revendication 8,
dans lequel l'unité de configuration de routeur est reliée au premier et au deuxième adaptateurs de réseaux de communication associés et dans lequel les informations d'interface comprennent des indications sur la première et la deuxième adresses IPv4 associées au premier et au deuxième adaptateurs de réseau de communication et sur des masques de réseau IPv4 associés au réseau de communication supérieur hiérarchiquement ou au sous-réseau de plan sur site subordonné.

10. Appareil d'automatisation suivant la revendication 9,
dans lequel les informations d'interface comprennent des indications sur un défault-gateway.

11. Appareil d'automatisation suivant l'une des revendications 8 à 10,
dans lequel l'unité de configuration de routeur est un serveur DCP correspondant à Discovery and Basic Configuration Protocol.

12. Appareil d'automatisation suivant l'une des revendications 1 à 10,
dans lequel les piles de protocole de communication mises en oeuvre par les modules de routeur sont des IP-Stacks, notamment des TCP/IP-Stacks ou des UDP/IP-Stacks.

13. Appareil d'automatisation suivant l'une des revendications 1 à 12,
dans lequel les adaptateurs de réseau de communication comprennent chacun une unité d'émission et de réception, ainsi qu'une unité fonctionnelle de commande d'un accès à un support de communication.

14. Procédé de configuration d'un appareil d'automatisation industriel modulaire suivant l'une des revendications 1 à 13, dans lequel
- l'appareil d'automatisation industriel modulaire comprend un système de bus de panneau arrière, une unité centrale de traitement de programme de commande et au moins un module de communication,
- le système de bus de panneau arrière est agencé en sous-réseaux IPv4,
- l'unité centrale et le au moins un module de communication sont reliés entre eux par le système de bus de panneau arrière et ont chacun
- un module de routeur pour la mise en oeuvre d'une pile de protocole de communication, comprenant des fonctions de couche de commutation,
- un premier adaptateur de réseau de communication pour relier le module de routeur au système de bus de panneau arrière,
- au moins un deuxième adaptateur de réseau de communication pour relier le module de routeur à un réseau de communication supérieur hiérarchiquement, agencé en sous-réseau IPv4 ou avec un sous-réseau de plan sur site subordonné, agencé en sous-réseau IPv4,
- une table de routage associée au module de routeur et
- une unité de configuration de routage pour la mise à jour des tables de routage respectives,
- les unités de configuration de routage transmettant les informations de routage mémorisées dans les tables de routage respectives à des unités de configuration de routage d'autres modules de routeur,
- les unités de configuration de routage mettant à jour les tables de routage respectives à l'aide d'informations de routage reçues d'unités de configuration de routage d'autres modules de routeur en ce qui concerne les routes vers des sous-réseaux IPv4 associés à d'autres modules de routeur, en ce qui concerne un défault-gateway et en ce qui concerne la liaison du module de routeur associé au système de bus de panneau arrière.

15. Procédé suivant la revendication 14,
dans lequel on agence exactement une unité de configuration de routage en unité de configuration de routage maître, dans lequel on agence toutes les autres unités de configuration de routage en unités de configuration de routage esclaves, dans lequel les unités de configuration de routage esclaves transmettent des informations de routage mémorisées dans les tables de routage respectives à l'unité de configuration de routage maître, dans lequel l'unité de configuration de routage maître répartit des informations de routage présentes dans l'unité de configuration de routage maître entre les unités de configuration de routage esclaves et choisit et prescrit exactement un routeur comme défault-gateway pour tous les modules de routeur, et dans lequel les unités de configuration de routage esclaves mettent à jour les tables de routage respectives au moyen d'informations de routage reçues de l'unité de configuration de routage maître en ce qui concerne les routes vers des sous-réseaux IPv4 associés à d'autres modules de routeur, en ce qui concerne le défault-gateway et en ce qui concerne la liaison du module de routeur associé au système de bus de panneau arrière.

16. Procédé suivant la revendication 15,
dans lequel l'unité de configuration de routage maître met à jour sa table de routage associée à l'aide d'informations de routage reçues d'unités de configuration de routage esclaves en ce qui concerne des routes vers des sous-réseaux IPv4 associés à d'autres modules de routeur, en ce qui concerne le défault-gateway et en ce qui concerne la liaison du module de routeur associé au système de bus de panneau arrière.

17. Procédé suivant la revendication 15 ou 16,
dans lequel l'unité de configuration de routage maître signale une erreur de configuration s'il y a plus d'un défault-gateway.

18. Procédé suivant l'une des revendications 15 à 17,
dans lequel on agence l'unité de configuration de routage de l'unité centrale en unité de configuration de routage maître.

19. Procédé suivant la revendication 14,
dans lequel les unités de configuration de routage échangent entre elles des informations de routage au moyen d'une communication peer-to-peer et, à la réception d'informations de routage, qui sont en contradiction avec une configuration propre respective, signalent une erreur de configuration.
